Europäisches Patentamt

European Patent Office

Office européen des brevets

(11) Veröffentlichungsnummer: **0 460 290 A2**

(12) **EUROPÄISCHE PATENTANMELDUNG**

(21) Anmeldenummer: 90124245.3

(22) Anmeldetag: 14.12.90

(51) Int. Cl.5: **G01L 3/10**

(30) Priorität: 06.06.90 DE 4018149

(43) Veröffentlichungstag der Anmeldung:
11.12.91 Patentblatt 91/50

(84) Benannte Vertragsstaaten:
AT BE CH DE DK ES FR GB GR IT LI LU NL SE

(71) Anmelder: **SIEMENS AKTIENGESELLSCHAFT**
**Wittelsbacherplatz 2**
**W-8000 München 2(DE)**

(72) Erfinder: **Schewe, Herbert, Dr.**
**Haydnstrasse 58**
**W-8522 Herzogenaurach(DE)**

(54) Einrichtung zur berührungslosen Ermittlung des Drehmomentes eines rotierenden, tordierten zylinderförmigen Körpers.

(57) Zur Messung des Drehmomentes eines rotierenden, tordierten zylinderförmigen Körpers enthält die Drehmoment-Sensoreinrichtung auf dem Körper zwei beabstandete Anordnungen magnetfelderzeugender Elemente. Diesen beiden Anordnungen sind jeweils ortsfeste Magnetfeldsensoren (3, 3') zugeordnet. Mit einer Elektronik ist die Phasenverschiebung der von den beiden magnetfelderzeugenden Anordnungen in den jeweiligen Magnetfeldsensoren (3, 3') verursachten Spannungsimpulse zu messen. Erfindungsgemäß enthält jeder Magnetfeldsensor (3, 3') ein von einer Spulenwicklung (7) umschlossenes Verbundelement (6) aus zwei streifenförmigen ferromagnetischen Elementteilen mit uniaxialer magnetischer Anisotropie und mit unterschiedlichen Koerzitivfeldstärken. Dabei ist mittels eines externen magnetischen Schaltfeldes der magnetfelderzeugenden Elemente nur in den Elementteilen der Verbundelemente (6) mit der kleineren Koerzitivfeldstärke eine spontane Ummagnetisierung hervorzurufen. Mit einer Elektronik ist dann die Phasenverschiebung der an den beiden Anordnungen in den jeweiligen Magnetfeldsensoren verursachten Spannungsimpulse zu messen. Die jeder magnetfelderzeugenden Anordnung zugeordneten Magnetfeldsensoren (3, 3') sollen jeweils ein Array (2) bilden. Sie sind als Dünnfilm-Strukturen auf einem Träger (4) erstellt.

FIG 1

Die Erfindung bezieht sich auf eine Einrichtung zur berührungslosen Ermittlung des Drehmomentes eines rotierenden, tordierten zylinderförmigen Körpers, auf dessen Mantelfläche sich zwei magnetfelderzeugende Anordnungen befinden, die

- jeweils aus mehreren, in Umfangsrichtung verteilt angeordneten magnetfelderzeugenden Elementen bestehen,
- in Achsrichtung des Körpers gesehen um eine vorbestimmte Entfernung gegenseitig beabstandet sind und
- denen jeweils eine Reihe von ortsfesten induktiven Magnetfeldsensoren zugeordnet ist, die jeweils einen von einer Spulenwicklung umgebenen Magnetkern aufweisen,

welche Einrichtung eine den beiden Magnetfeldsensor-Reihen nachgeordnete Ektronik enthält, mit der eine Phasenverschiebung zwischen den an den Magnetfeldsensor-Reihen ab zunehmenden Spannungsimpulsen in Abhängigkeit von dem an dem Körper angreifenden Drehmoment zu messen ist.

Eine derartige Einrichtung ist z.B. der Veröffentlichung "IEEE Trans. Magn.", Vol. MAG-23, No. 5, Sept. 1987, Seiten 2191 bis 2193 zu entnehmen.

Bei der bekannten Drehmoment-Sensoreinrichtung sind auf dem Umfang einer drehbeweglichen Welle in einem vorbestimmten Abstand zwei gleichartige magnetfelderzeugende Anordnungen vorgesehen. Jede dieser Anordnung bildet dabei einen mehrpoligen Ringmagneten mit in Umfangsrichtung regelmäßig verteilten alternierenden Magnetpolen. Bei Rotation der Welle erzeugen diese Ringmagnete jeweils ein etwa sinusförmiges Magnetfeld $H_1$ bzw. $H_2$. Die Ringmagnete sind jeweils konzentrisch von einer Reihe aus sternförmig angeordneten, ortsfesten Magnetfeldsensoren berührungslos umschlossen, wobei die Anzahl der Magnetfeldsensoren der der Magnetpole entspricht. Als Magnetfeldsensoren dienen Magnetkerne, die jeweils von einer Spulenwicklung umgeben sind. Die hintereinandergeschalteten Magnetfeldsensoren beider Reihen bilden Zweige einer Multivibrator-Brückenschaltung, die Teil einer den beiden Magnetfeldsensor-Reihen nachgeordneten Elektronik sind. Im unbelasteten Zustand sind die mit dem Multivibrator durch die Magnetfelder $H_1$ und $H_2$ der Ringmagnete in den Magnetfeldsensoren induktiv erzeugten Wechselspannungen gleich groß und in Phase, so daß eine zwischen den beiden Brückenzweigen abzugreifende Differenzspannung $E_{out}$ gleich null ist. Durch ein an der Welle angreifendes (tordierendes) Drehmoment D wird die Welle um einen Winkel $\Delta\theta$ tordiert und so eine Phasenverschiebung zwischen den beiden Wechselspannungen hervorgerufen. Die Differenzspannung $E_{out}$ ist dann proportional zu der Torsion und somit zu diesem Drehmoment D. Bei der bekannten Einrichtung ist jedoch der Herstellungsaufwand ganz erheblich. Jede der beiden Magnetfeldsensor-Reihen bestehen nämlich aus etwa 40 Magnetkernen mit jeweils etwa 150 Windungen der zugeordneten Spulenwicklungen. Diese Sensoren müssen möglichst identisch aufgebaut und genau im Abstand der alternierenden Magnetpole der Ringmagnete auf der Welle angeordnet sein.

Weitere Ausführungsformen von Magnetfeldsensoren, die insbesondere für Drehzahlgeber vorgesehen werden können, gehen aus der Veroffentlichung "Siemens Forsch.- u. Entw.-Ber.", Band 15 (1986) No. 3, Seiten 135 bis 144 hervor. Bei diesen Magnetfeldsensoren wird ein spontaner Schalteffekt in ferromagnetischen Drähten ausgenutzt, der auf einer schnellen Ausbreitung großer Barkhausen-Sprünge basiert. Entsprechende Drähte sind z.B. die sogenannten "Wiegand-Drähte", die aus einer besonderen ferromagnetischen Legierung bestehen und todiert sind. Darüber hinaus können auch spezielle Impulsdrähte derartige Schalteffekte ermöglichen. Ein solcher Impulsdraht stellt ein Verbundelement dar, das sich aus einem drahtförmigen Kern mit einem Durchmesser von etwa 50 bis 300 $\mu$m und einem diesen Kern umschließenden Mantel zusammensetzt. Dabei besteht der Kern aus einem verhältnismäßig weichmagnetischen Material (mit einer Koerzitivfeldstärke $H_{c1}$ zwischen etwa 0,2 und 20 A/cm). Um in diesem Kern durch ein äußeres Magnetfeld, das sogenannte Schaltfeld, eine schnelle, sprungartige Flußänderung und damit eine Umkehr der Magnetisierungsrichtung hervorzurufen, muß er außerdem eine ausgeprägte uniaxiale magnetische Anisotropie mit in seiner Längsrichtung bzw. Achsrichtung liegender magnetischer Vorzugsrichtung aufweisen. Damit ferner bei einer verhältnismäßig geringen Länge des Kernes die Ausbildung von unerwünschten Abschlußdomänen verhindert wird, ist für den Mantel ein vergleichsweise magnetisch härteres Material mit einer Koerzitivfeldstärke $H_{c2}$ von mindestens 30 A/cm gewählt, um so den Kern permanent aufmagnetisieren zu können.

Mit einem entsprechenden Impulsdraht als einem Teil eines Magnetfeldsensors läßt sich z.B. eine Schalteinrichtung ansteuern oder ein Drehzahlgeber aufbauen. Hierzu befindet sich der Draht in einer ihn umschließenden Spulenwicklung als weiterem Teil des Magnetfeldsensors. Wird in dem Kern des Impulsdrahtes mittels eines externen magnetischen Schaltfeldes nun eine spontane Magnetisierung beim Überschreiten einer bestimmten Feldstärkeschwelle hervorgerufen (vgl. hierzu z.B. auch das Buch von E.Kneller: "Ferromagnetismus", Springer-Verlag 1962, insbesondere Seiten 401 bis 408), so wird in der Spulenwicklung ein Spannungsimpuls induziert. Dieser Spannungsimpuls kann dann mittels einer der Spulenwicklung nachgeordneten Elektronik für einen Steuer- oder Schaltvorgang herangezogen werden.

Es hat sich jedoch gezeigt, daß die bekannten Impulsdrähte und die sie umgebenden Spulenwicklungen nur mit verhältnismäßig großem Aufwand herstellbar sind und außerdem sich in den Drähten die magnetischen Eigenschaften, insbesondere die geforderten Anisotropieverhältnisse, mit hinreichender Exaktheit nur schwer reproduzierbar einstellen lassen. Dies hat zur Folge, daß die von Magnetfeldsensoren dieses Typs mit gleichem Aufbau innerhalb einer Magnetfeldsensor-Reihe erzeugten Impulse vielfach recht unterschiedlich sind.

Aufgabe der vorliegenden Erfindung ist es deshalb, die Drehmoment-Sensoreinrichtung mit den eingangs genannten Merkmalen dahingehend auszugestalten, daß die genannten Probleme vermindert sind. Insbesondere soll sich die Einrichtung mit Magnetfeldsensoren aufbauen lassen, die verhältnismäßig einfach und mit hinreichender Reproduzierbarkeit herstellbar sind.

Diese Aufgabe wird erfindungsgemäß dadurch gelöst, daß die Magnetfeldsensoren jeweils ein als Magnetkern von der Spulenwicklung umschlossenes Verbundelement aus streifenförmig ausgebildeten ferromagnetischen Elementteilen enthalten, die jeweils

- eine uniaxiale magnetische Anisotropie mit in der Ausdehnungsrichtung des Verbundelementes liegender magnetischer Vorzugsrichtung aufweisen
und
- derart aus Materialien mit in dieser Vorzugsrichtung unterschiedlichen Koerzitivfeldstärken bestehen, daß mittels eines von einem magnetfelderzeugenden Element hervorgerufenen externen magnetischen Schaltfeldes nur in dem Elementteil des Verbundelementes mit der kleineren Koerzitivfeldstärke eine spontane Ummagnetisierung erfolgt, welche zu einem entsprechenden Spannungsimpuls in der zugeordneten Spulenwicklung führt,

und daß die Magnetfeldsensoren jeder Reihe als ein Array bildende Dünnfilm-Strukturen auf einem nicht-magnetischen Träger ausgebildet sind.

Die mit dieser Ausgestaltung der Drehmoment-Sensoreinrichtung verbundenen Vorteile sind insbesondere darin zu sehen, daß die Dünnfilm-Technik hohen Anforderungen an die Genauigkeit einer Strukturierung und an die Reproduzierbarkeit der magnetischen Eigenschaften der Magnetfeldsensoren genügen kann und eine verhältnismäßig preiswerte Serienfertigung ermöglicht. Es lassen sich deshalb Sensoren mit großer lateraler Auflösung und definierten Impulsverhältnissen aufbauen, so daß sie innerhalb eines Arrays gleichwertige Elemente darstellen. Mit einem Array derartiger Magnetfeldsensoren braucht vorteilhaft jeweils nur ein Teil des Umfangs des rotierenden zylinderförmigen Körpers im Bereich der jeweils zugeordneten magnetfelderzeugenden Anordnung erfaßt zu werden.

Vorteilhafte Weiterbildungen der erfindungsgemäßen Einrichtung gehen aus den Unteransprüchen hervor.

Zur weiteren Erläuterung der Erfindung wird nachfolgend auf die schematische Zeichnung Bezug genommen. Dabei ist in Figur 1 ein Teil eines Sensor-Arrays einer erfindungsgemäßen Drehmoment-Sensoreinrichtung dargestellt. Figur 2 zeigt den prinzipiellen Aufbau eines schichtförmigen Verbundelementes eines Magnetfeldsensors dieses Arrays. In den Diagrammen der Figuren 3 und 4 sind Hysteresiskurven von entsprechenden Verbundelementen wiedergegeben. In Figur 5 ist ein Sensor-Array an einem Teilstück einer rotierenden Welle angedeutet. Das Diagramm der Figur 6 zeigt mit einem solchen Array zu erzeugende Impulsspannungen. Aus Figur 7 geht eine prinzipielle Anordnung und Schaltung einer erfindungsgemäßen Drehmoment-Sensoreinrichtung an einer rotierenden Welle hervor. In den Figuren sind sich entsprechende Teile mit denselben Bezugszeichen versehen.

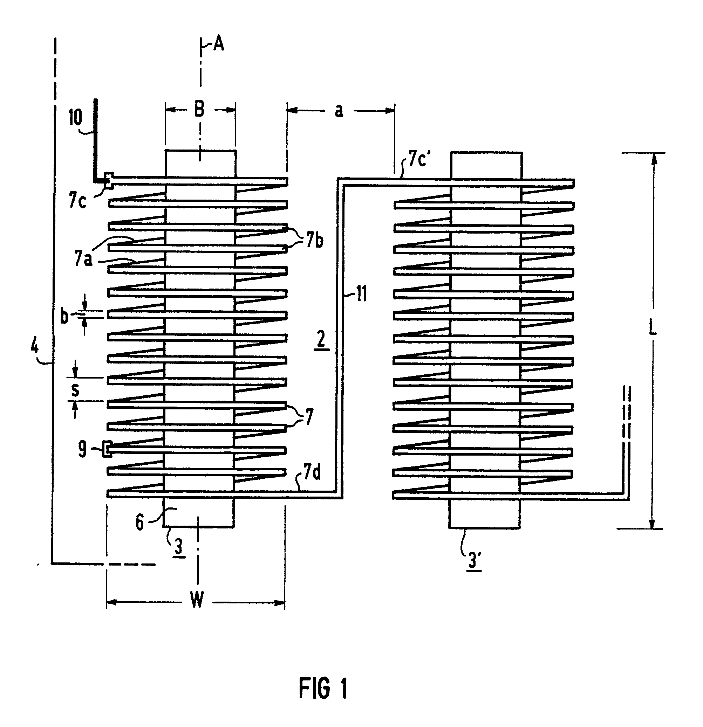

Eine erfindungsgemäße Einrichtung zur magnetischen Bestimmung des Drehmomentes eines rotierenden zylinderförmigen Körpers enthält mindestens zwei Magnetfeldsensor-Arrays, von denen in Figur 1 ein Teil eines einzelnen Sensor-Arrays in Aufsicht dargestellt ist. Dieses allgemein mit 2 bezeichnete Array weist zwei praktisch identische Magnetfeldsensoren 3 und 3' auf. Diese Magnetfeldsensoren sind gegenseitig um einen Abstand a beabstandet, der z.B. zwischen 0,1 und 1 mm liegen kann. Ein Array einer erfindungsgemäßen Sensoreinrichtung setzt sich im allgemeinen aus einer wesentlich größeren Anzahl von Magnetfeldsensoren als in Figur 1 gezeigt zusammen. Alle diese Magnetfeldsensoren sollen erfindungsgemäß in Dünnfilm-Technik auf einem nicht näher ausgeführten Träger (Substrat) 4 aus nichtmagnetischem Material erstellt sein und dort ein "Array" bilden. Unter einem Array, das auch als "Reihenanordnung" oder "Feld" bezeichnet wird, soll dabei eine auf einer Oberfläche des Trägers verhältnismäßig dichte Anordnung zumindest weitgehend baugleicher Sensoren verstanden werden. Von diesem Array ist nachfolgend der an einem Rand des Trägers 4 befindliche Magnetfeldsensor 3 näher erläutert.

Dieser Magnetfeldsensor setzt sich im wesentlichen aus einem schichtförmigen Verbundelement 6 als Magnetkern und einer diesen Kern umschließenden Spulenwicklung 7 zusammen. Das schichtförmige Verbundelement 6 hat in Richtung seiner Ausdehnung A eine Länge L, die im allgemeinen über 1 mm und beispielsweise unter 2 cm liegt. Die quer zur Ausdehnung(srichtung) A zu messende Breite B des Verbundelementes kann einige $\mu$m bis 1 mm betragen. Die Weite W der Spulenwicklung 7 quer zur Ausdehnung(srichtung) A liegt im allgemeinen im Bereich des 1,5- bis 3-Fachen der Breite B. Der Minimalwert $W_{min}$ der Weite W sollte dabei die Größe $W_{min}$ = B + 20 $\mu$m nicht unterschreiten. Es läßt sich so auf einer vorgegebenen Fläche vorteilhaft eine entsprechend große Anzahl von Magnetfeldsensoren zu einem Array anordnen. Die Länge L des Verbundelementes 6, die Leiterbreite b der einzelnen Windungen der Spulenwicklung 7 sowie die Windungssteigung s legen dann die Anzahl der möglichen Windungen der Wicklung fest. Im allgemeinen liegen die Leiterbreite b in der Größenordnung von einigen $\mu$m und die Windungssteigung s unter 10 $\mu$m. So können z.B. bei einer Windungssteigung von 3 $\mu$m, einer Leiterbreite b von 1 $\mu$m und einer Länge L von 3 mm etwa 1000 Windungen der Wicklung 7 realisiert werden.

Zur Herstellung entsprechender Magnetfeldsensoren wie z.B. des Sensors 3 in Dünnfilm-Technik werden zunächst auf dem Träger 4 die beispielsweise schräg zur Ausdehnung A verlaufenden, untereinander parallelen unteren Leiterteile 7a der Wicklung 7 aus einem geeigneten Leitermaterial wie z.B. Cu, Ag oder Au abgeschieden. Darauf wird gegenüber diesen Leiterteilen isoliert eine das Verbundelement 6 bildende Schichtenfolge aus verschiedenen ferromagnetischen Materialien aufgebracht und anschließend isoliert. Über diesen Aufbau aus den unteren Leiterteilen 7a und dem Verbundelement 6 hinweg werden dann die sich etwa senkrecht zur Ausdehnung A erstreckenden oberen Leiterteile 7b ausgebildet, die dabei mit den entsprechenden unteren Leiterteilen 7a im Randbereich der Spulenwicklung 7 kontaktiert werden. Um dieses Kontaktieren zu erleichtern, ist es vorteilhaft, wenn die entsprechenden Kontaktbereiche der unteren Leiterteile 7a als verhältnismäßig großflächige Kontaktzonen, sogenannte "Kontaktpads", ausgebildet werden. In Figur 1 ist von diesen Kontaktbereichen zur Vereinfachung der Darstellung nur ein einziger näher ausgeführt und mit 9 bezeichnet. Das äußere Ende 7c der am Rand des Arrays 2 liegenden Spulenwicklung 7 wird ebenfalls zweckmäßig als ein solcher großflächiger Kontaktbereich gestaltet. An entsprechenden Kontaktbereichen des gesamten Arrays enden auch die elektrischen Anschlußleiter einer nachgeordneten Elektronik. Von diesen Anschlußleitern ist in der Figur nur ein mit 10 bezeichneter, mit dem Kontaktbereich 7c des Magnetfeldsensors 3 verbundener Leiter ersichtlich. Außerdem sind die einzelnen Magnetfeldsensoren des Arrays untereinander über entsprechende Leiterbahnen zusammengeschaltet. Figur 1 zeigt nur eine dieser Verbindungsleiterbahnen zwischen Verbindungsstellen 7d und 7c' der benachbarten Magnetfeldsensoren 3 und 3'. Alle Leiterbahnen 11 des Arrays können vorteilhaft zusammen mit den oberen Leiterteilen 7b im gleichen Arbeitsgang erstellt werden.

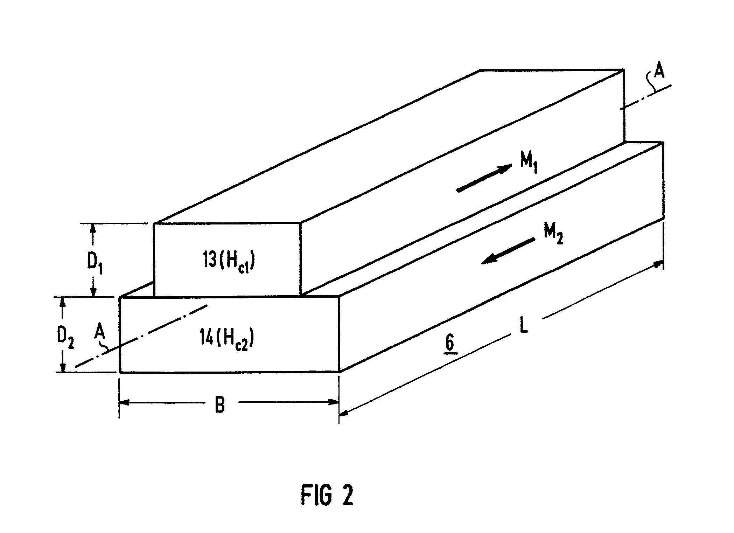

In Figur 2 ist der prinzipielle Aufbau des schichtförmigen Verbundelementes 6 eines Magnetfeldsensors, beispielsweise des Sensors 3 aus Figur 1, in Schrägansicht schematisch ausgeführt. Das Verbundelement wird dabei durch ein Schichtsystem aus mindestens zwei übereinander angeordneten, streifenförmigen Elementteilen 13 und 14 gebildet. Konkrete Ausgestaltungsmöglichkeiten des Schichtsystems aus den Elementteilen 13 und 14 sind in der nicht-vorveröffentlichten DE-Patentanmeldung P 40 30 016.9 vom 24.4.90 mit dem Titel "Magnetfeldsensor einer Schalteinrichtung mit Teilen unterschiedlicher Koerzitivfeldstärke" zu entnehmen. Die beiden, nachfolgend als Magnetschichten 13 und 14 bezeichneten Elementteile des Schichtsystems sollen nämlich aus unterschiedlichen ferromagnetischen Materialien bestehen, die jeweils eine ausgeprägte uniaxiale magnetische Anisotropie mit in Richtung der Achse A liegender magnetischer Vorzugsrichtung und verschiedene Koerzitivfeldstärken $H_{c1}$ bzw. $H_{c2}$ (jeweils in dieser Vorzugsrichtung betrachtet) aufweisen. Hierbei sollte die Koerzitivfeldstärke $H_{c1}$ der Magnetschicht 13 wesentlich kleiner, vorzugsweise mindestens fünf mal kleiner als die Koerzitivfeldstärke $H_{c2}$ der Magnetschicht 14 sein. Im allgemeinen sind für die Magnetschicht 13 weichmagnetische Materialien mit einer Koerzitivfeldstärke $H_{c1}$ von unter 10 A/cm, vorzugsweise unter 1 A/cm, geeignet. Beispiele für solche Materialien sind eine CoVFe-Legierung mit 49 Gew.-% Co und 2 Gew.-% V oder eine NiFe-Legierung mit etwa 80 Gew.-% Ni. Demgegenüber sind für die Magnetschicht 14 magnetisch härtere Materialien, insbesondere mit einer Koerzitivfeldstärke $H_{c2}$ von über 50 A/cm, vorzugsweise über 100 A/cm, zu wählen. Entsprechende Materialien sind beispielsweise CoPt-, CoNi-, CoFe- oder NiCoFe-Legierungen.

Die Magnetschichten 13 und 14 werden nach bekannten Verfahren der Dünnfilm-Technik wie z.B. durch Aufdampfen, Sputtern oder galvanische Abscheidung mit Schichtdicken $D_1$ bzw. $D_2$ von jeweils zwischen 1 und 10 $\mu$m hergestellt. Die gewünschte uniaxiale Anisotropie kann vorteilhaft in bekannter Weise durch Formanisotropie und/oder Diffusionsanisotropie und/oder Spannungsanisotropie eingestellt werden. Sieht man beispielsweise ein Sputterverfahren vor, so können vorteilhaft die großen mechanischen Spannungen ausgenutzt werden, die bei einer Erwärmung während des Sputterns und einer sich anschließenden Abkühlung aufgrund unterschiedlicher Wärmeausdehnung der Magnetschichten und des darunterliegenden Trägers entstehen. Außerdem können Spannungen in einer Magnetschicht auch durch die Sputterparameter direkt beeinflußt werden. Darüber hinaus kann in einer Schicht eine Zugspannung aufgrund einer positiven Sättigungsmagnetostriktion eines Materials bzw. eine Druckspannung aufgrund einer negativen Magnetostriktion zu einer Spannungsanisotropie in Richtung der Achse A führen. Vorteilhaft lassen sich deshalb Materialien wählen, deren Sättigungsmagnetostriktion $\lambda_s$ ungleich null ist, wobei insbesondere $|\lambda_s| > 10^{-6}$ gelten kann.

Wie ferner in Figur 2 angedeutet ist, liegt die Magnetisierung $M_2$ der hochkoerzitiven Magnetschicht 14 in Richtung der Achse A. Diese Schicht erzeugt dann ein magnetisches Streufeld, das im Bereich der weichmagnetischen Magnetschicht 13 parallel zu deren in der Figur angenommenen Magnetisierung $M_1$ liegt. Die Richtungen der Magnetisierungen $M_1$ und $M_2$ sind dabei in der Figur durch gepfeilte Linien veranschaulicht.

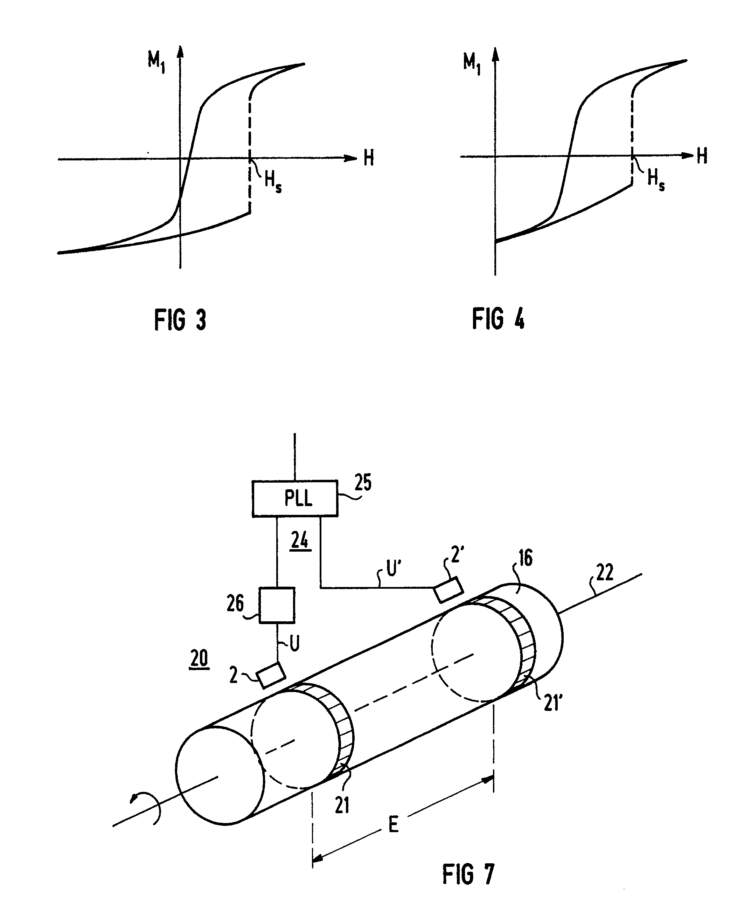

Figur 3 zeigt als Diagramm zu dem Verbundelement 6 eine zugehörige Hysteresiskurve. Dabei sind auf der Abszisse die Feldstärke H eines auf das Verbundelement einwirkenden externen Magnetfeldes und auf der Ordinate die in der Magnetschicht 13 zu beobachtende Magnetisierung $M_1$ aufgetragen. Zum Ummagnetisieren dieser Magnetschicht wird in an sich bekannter Weise (vgl. z.B. die genannte Veröffentlichung "Siemens Forsch.-u. Entwickl.-Ber.") ein magnetisches Gegenfeld H (externes Schaltfeld) parallel zu der Magnetisierung $M_2$ angelegt, so daß beim Erreichen einer bestimmten Schwellwertfeldstärke $H_s$ durch die Magnetschicht 13 eine Ummagnetisierungsfront läuft, die in der sie umgebenden Spulenwicklung eine entsprechende Spannung induziert und die Magnetisierung $M_1$ umkehrt. Anschließend wird die Magnetschicht 13 in bekannter Weise durch ein Rücksetzfeld in den in Figur 2 gezeigten Ausgangszustand wieder zurückversetzt.

Auf ein derartiges externes Rücksetzfeld kann man dann verzichten, wenn für die hartmagnetische Magnetschicht 14 ein Material gewählt wird, dessen magnetische Remanenz $M_{r2}$ hinreichend groß ist. Eine Vergrößerung der Remanenz $M_{r2}$ gegenüber den dem Diagramm der Figur 3 zugrundegelegten Magnetisierungsverhältnissen äußert sich nämlich in einer Verschiebung der Hysteresiskurve in positiver Abszissenrichtung und ist als entsprechendes Diagramm in Figur 4 dargestellt. Dies bedeutet, daß zur Ausbildung eines externen Schaltfeldes nur Magnetpole einer Polarität erforderlich sind, um in einem Magnetfeldsensor-Array eine Impulsspannung zu erzeugen. Allerdings muß in diesem Fall das Schaltfeld $H_s$ gegenüber den Verhältnissen des Diagramms der Figur 3 entsprechend erhöht sein.

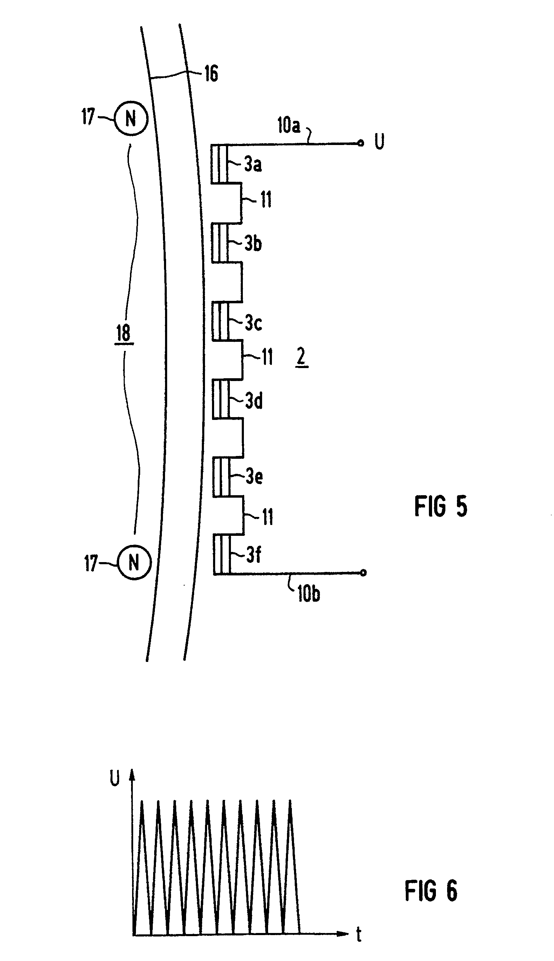

Der Hysteresiskurve nach Figur 4 entsprechende Magnetisierungsverhältnisse sind für das in Figur 5 gezeigte Sensor-Array 2 angenommen. Deshalb befinden sich am Außenrand einer rotierenden Welle 16 in Umfangsrichtung regelmäßig verteilt magnetfelderzeugende Elemente, beispielsweise Magnete 17, die radial nach außen nur Felder gleicher Polarität, z.B. der Polarität N (Nordpol), hervorrufen und eine ringförmige Magnetanordnung 18 bilden. Diese Magnete, von denen in dem in der Figur gezeigten Ausschnitt nur zwei ersichtlich sind, werden im Betriebsfall an dem ortsfesten Sensor-Array 2, das nur einen Teilbereich des Umfangs der Welle 16 und somit der gesamten ringförmigen Magnetanordnung 18 erfaßt, vorbeigeführt.

Ein solcher Aufbau der Magnetanordnung 18 aus magnetfelderzeugenden Elementen 17 gleicher Polarität gewährleistet eine hohe Winkelauflösung. Ein weiterer Vorteil ergibt sich aus der verhältnismäßig einfachen Herstellungsmöglichkeit der auf dem Kreisumfang angeordneten magnetfelderzeugenden Elemente, die nach dem Zusammenbau in einem Arbeitsgang in einer Richtung aufmagnetisiert werden können. Damit ist in diesem Fall die Gefahr einer fehlerhaften Anordnung vieler alternierender Magnete ausgeschlossen. Eine wesentliche Vereinfachung bei der Herstellung der magnetfelderzeugenden Elemente 17 kann auch dadurch erzielt werden, daß sie als hartmagnetische Schichten durch Sputtern, Plasmaspritzen oder galvanische Abscheidung auf einer Kunststoff- oder Keramik-Folie aufgebracht, mit hoher Maßhaltigkeit mittels bekannter Methoden der Mikrostrukturtechnik geätzt und schließlich auf dem Zylindermantel der Welle 16 fixiert werden. Als hartmagnetische Materialien kommen hierzu insbesondere Schichten aus CoPt, CoNi, CoFeNi, FeSmTi, CoSm oder NdFeB in Frage.

Eine hohe Winkelauflösung ist auch durch die erfindungsgemäße Verwendung einer Vielzahl von Magnetfeldsensoren innerhalb eines Sensor-Arrays gewährleistet. Das in Figur 5 gezeigte Sensor-Array 2 enthält sechs Magnetfeldsensoren 3a bis 3f mit einer Hysteresiskurve gemäß Figur 4. Diese Sensoren sind über Leiterbahnen 11 beispielsweise in Serie geschaltet. Die so an dem Sensor-Array zu erzeugende Impulsspannung U wird an Anschlußleitern 10a und 10b an dem jeweils äußeren Magnetfeldsensor 3a bzw. 3f abgegriffen. Gegebenenfalls ist es aber auch möglich, die Sensor-Arrays einer erfindungsgemäßen Sensoreinrichtung mit mehreren Magnetfeldsensoren so auszubilden, daß die an jedem Sensor erzeugten Impulsspannungen einzeln abgenommen und in einer bekannten Summationsschaltung addiert werden.

Eine mit dem Aufbau nach Figur 5 zu erzeugende Pulsfolge der Impulsspannung U ist in dem Diagramm der Figur 6 in Abhängigkeit von der Zeit dargestellt. Das Diagramm verdeutlicht insbesondere die verhältnismäßig große Auflösung der Summenspannung bei einer erfindungsgemäßen Verwendung eines Sensor-Arrays.

Abweichend von dem den Figuren 4 bis 6 zugrundegelegten Ausführungsbeispiel ist es selbstverständlich auch möglich, für die Arrays einer erfindungsgemäßen Sensoreinrichtung Magnetfeldsensoren mit einer Hysteresiskurve entsprechend dem Diagramm der Figur 3 zu verwenden. Die Auflösung der an den Arrays abzunehmenden Impulsspannungen ist jedoch in diesem Fall durch Verdoppelung der Periodenlänge längs des Außenumfangs der Welle um einen Faktor 2 kleiner, da hier immer Paare von magnetfelderzeugenden Elementen unterschiedlicher Polarität erforderlich sind.

Eine Drehmoment-Sensoreinrichtung nach der Erfindung ist in Figur 7 als Schrägansicht angedeutet. Diese allgemein mit 20 bezeichnete Einrichtung weist mindestens zwei magnetfelderzeugende Anordnungen (Magnetanordnungen) 21 und 21' auf, die eine rotierende Welle 16 ringförmig umschließen und in Richtung der Drehachse 22 dieser Welle um eine vorbestimmte Entfernung E gegenseitig beabstandet sind. Jede der Magnetanordnungen 21 und 21' besteht dabei aus einer Vielzahl von in Wellenumfangsrichtung regelmäßig verteilten magnetfelderzeugenden Elementen (Magneten) 17. Jeder Magnetanordnung 21 bzw. 21' ist ein ortsfestes Sensor-Array 2 bzw. 2' zugeordnet, an dem Impulsspannungen U bzw. U' abzunehmen sind. Mit diesen Impulsspannungen kann mittels einer nachgeordneten Elektronik in bekannter Weise (vgl. z.B. die eingangs genannten Veröffentlichung "IEEE Trans. Magn.", Vol. MAG-23) eine Differenzspannung gebildet werden, die in einem über die Entfernung E unbelasteten, d.h. nicht-tordierten Zustand der Welle 16 null ist. Wie in der Figur angedeutet ist, lassen sich die Impulsspannungen U und U' auch mit einer Elektronik 24 weiterverarbeiten, die einen sogenannten PLL (Phase Looked Loop)-Verstärker 25 enthält. Mittels dieses Verstärkers ist in bekannter Weise eine Ausgangsspannung zu erzeugen, die der Phasenverschiebung zwischen der Impulsspannung U (als einer Referenzspannung) und der Impulsspannung U' (als einer Eingangsspannung) proportional ist. Ein im Signalweg der Impulsspannung U des Sensor-Arrays 2 vorhandenes elektronisches Verzögerungsglied (Delay) 26 ist in der Regel in dem PLL-Verstärker 25 enthalten und kann dazu verwendet werden, um die Phase im unbelasteten Zustand der Welle abzugleichen.

## Patentansprüche

1. Einrichtung zur berührungslosen Ermittlung des Drehmomentes eines rotierenden zylinderförmigen Körpers, auf dessen Mantelfläche sich zwei magnetfelderzeugende Anordnungen befinden, die

- jeweils aus mehreren, in Umfangsrichtung verteilt angeordneten magnetfelderzeugenden Elementen bestehen,
- in Achsrichtung des Körpers gesehen um eine vorbestimmte Entfernung gegenseitig beabstandet sind und
- denen jeweils eine Reihe von ortsfesten induktiven Magnetfeldsensoren zugeordnet ist, die jeweils einen von einer Spulenwicklung umgebenen Magnetkern aufweisen,

welche Einrichtung eine den beiden Magnetfeldsensor-Reihen nachgeordnete Elektronik enthält, mit der eine Phasenverschiebung zwischen den an den Magnetfeldsensor-Reihen abzunehmenden Spannungsimpulsen in Abhängigkeit von dem an dem Körper angreifenden Drehmoment zu messen ist, **dadurch gekennzeichnet,**

a) daß die Magnetfeldsensoren (3, 3', 3a bis 3f) jeweils als Magnetkern ein von der Spulenwicklung (7) umschlossenes Verbundelement (6) aus zwei streifenförmig ausgebildeten ferromagnetischen Elementteilen (13, 14) enthalten, die jeweils

- eine unaxiale magnetische Anisotropie mit in der Ausdehnungsrichtung (A) des Verbundelementes (6) liegender magnetischer Vorzugsrichtung aufweisen und
- derart aus Materialien mit in dieser Vorzugsrichtung unterschiedlichen Koerzitivfeldstärken ($H_{c1}$, $H_{c2}$) bestehen, daß mittels eines von einem magnetfelderzeugenden Element (17) hervorgerufenen externen magnetischen Schaltfeldes ($H_s$) nur in dem Elementteil (13) des Verbundelementes (6) mit der kleineren Koerzitivfeldstärke ($H_{c1}$) eine spontane Ummagnetisierung erfolgt, welche zu einem entsprechenden Spannungsimpuls (U, U') in der zugeordneten Spulenwicklung (7) führt,

und

b) daß die Magnetfeldsensoren (3, 3', 3a bis 3f) jeder Reihe als ein Array (2, 2') bildende Dünnfilm-Strukturen auf einem nicht-magnetischen Träger (4) ausgebildet sind.

2. Drehmoment-Sensoreinrichtung nach Anspruch 1, **dadurch gekennzeichnet,** daß in jedem Magnetfeldsensor (3, 3', 3a bis 3f) der Arrays (2, 2') eine weichmagnetische Magnetschicht (13) des ersten Elementteils eine Koerzitivfeldstärke ($H_{c1}$) aufweist, die mindestens 5 mal kleiner ist als die Koerzitivfeldstärke ($H_{c2}$) einer hochkoerzitiven Magnetschicht (14) des zweiten Elementteils.

3. Drehmoment-Sensoreinrichtung nach Anspruch 2, **dadurch gekennzeichnet,** daß die weichmagnetischen Magnetschichten (13) aus einem Material mit einer Koerzitivfeldstärke ($H_{c1}$) von unter 10 A/cm, vorzugsweise unter 1 A/cm bestehen.

4. Drehmoment-Sensoreinrichtung nach Anspruch 2 oder 3, **dadurch gekennzeichnet,** daß die hochkoerzitiven Magnetschichten (14) aus einem Material mit einer Koerzitivfeldstärke ($H_{c2}$) von über 50 A/cm, vorzugsweise über 100 A/cm bestehen.

5. Drehmoment-Sensoreinrichtung nach Anspruch 4, **dadurch gekennzeichnet,** daß die Koerzitivfeldstärke ($H_{c2}$) des Materials der hochkoerzitiven Magnetschichten (14) so groß ist, daß die durch das externe magnetische Schaltfeld ($H_s$) in der jeweils zugeordneten weichmagnetischen Magnetschicht (13) hervorgerufene Ummagnetisierung bei Abwesenheit des Schaltfeldes ($H_s$) rückgängig gemacht ist (vgl. Figur 4).

6. Drehmoment-Sensoreinrichtung nach einem der Ansprüche 2 bis 5, **dadurch gekennzeichnet,** daß in den Magnetschichten (13, 14) der Magnetfeldsensoren (3, 3', 3a bis 3f) die uniaxiale magnetische Anisotropie durch Formanisotropie und/oder durch Diffusionsanisotropie und/oder durch Spannungsanisotropie eingestellt ist.

7. Drehmoment-Sensoreinrichtung nach einem der Ansprüche 1 bis 6, **dadurch gekennzeichnet,** daß die Materialien der Verbundelemente (6) der Magnetfeldsensoren (3, 3', 3a bis 3f) eine Sättigungsmagnetostriktion $\lambda_s$ aufweisen, für die gilt:
$|\lambda_s| > 10^{-6}$.

8. Drehmoment-Sensoreinrichtung nach einem der Ansprüche 1 bis 7, **dadurch gekennzeichnet,** daß die magnetfelderzeugenden Elemente (17) jeder magnetfelderzeugenden Anordnung (18, 21, 21') auf einer Folie aufgebracht und diese Folie auf dem Zylindermantel des rotierenden Körpers (16) angeordnet ist.

FIG 1

FIG 2

FIG 3

FIG 4

FIG 7

16

17 — (N)

10a
U

3a

11

3b

3c

11  2

18

3d

3e

11

17 — (N)

3f

10b

**FIG 5**

U

t

**FIG 6**